# EUROPÄISCHE PATENTSCHRIFT

(11) **EP 3 681 690 B1**
(45) Veröffentlichungstag und Bekanntmachung des Hinweises auf die Patenterteilung: **18.05.2022**
(21) Anmeldenummer: 18773073.4
(22) Anmeldetag: 27.08.2018
(51) Int. Cl.: B29B 7/84, B29B 7/86, B29B 7/74, B29C 48/25, B29C 48/385, B29C 48/693, B29B 7/58, B29C 48/76

(54) **VORRICHTUNG UND VERFAHREN ZUM FILTERN UND ENTGASEN EINER KUNSTSTOFFSCHMELZE**
METHOD AND DEVICE FOR FILTERING AND DEGASSING A POLYMERIC MELT
DISPOSITIF ET PROCÉDÉ DE FILTRAGE ET DE DÉGAZAGE D'UNE MATIÈRE PLASTIQUE FONDUE

(30) Priorität: 12.09.2017 EP 17001523
(43) Veröffentlichungstag der Anmeldung: 22.07.2020
(73) Patentinhaber: Next Generation Analytics GmbH, 4710 Grieskirchen (AT)
(72) Erfinder: KASTNER, Friedrich, 4710 Grieskirchen (AT)
(74) Vertreter: Humpl-Wagner, Esther
(86) Internationale Anmeldenummer: PCT/EP2018/000450
(87) Internationale Veröffentlichungsnummer: WO 2019/052688

(56) Entgegenhaltungen:
- EP-A1- 0 490 056
- EP-A1- 2 082 862
- EP-A2- 0 270 501
- EP-A2- 1 211 048
- DE-A1- 3 336 179
- DE-A1-102011 014 467
- DE-A1-102011 106 244
- DE-B- 1 131 875
- DE-U1- 9 105 000
- GB-A- 1 168 063
- GB-A- 2 027 605
- US-A- 5 518 672

## Beschreibung

Die Erfindung betrifft eine Vorrichtung und ein Verfahren zu deren Verwendung zum Entgasen und Filtern von insbesondere thermoplastischen Kunststoffschmelzen.

Kunststoffe aus Produktionsabfall oder bereits in Umlauf gewesenes Kunststoffmaterial enthalten Verunreinigungen, die beispielsweise durch Bedruckung, Lackierung oder Verschmutzung entstehen, aber auch Metalle, andere Kunststoffe und organische Verunreinigungen sind in Kunststoffabfällen vorhanden

Die Verunreinigungen bestehen oft auch aus niedermolekularen oder leicht flüchtigen Stoffen. Die niedermolekularen Verunreinigungen weisen oft einen hohen Dampfdruck auf und können beim Aufheizen der Kunststoffe wie mit einem Treibmittel aufgeschäumt werden

Vor der Wiederaufbereitung müssen diese Kunststoffmaterialien daher gereinigt werden.

Ab einer gewissen Schmelzetemperatur kann der Dampfdruck der Inhaltsstoffe so groß werden, dass durch den Dampfdruck der Verunreinigung Gasblasen im Trägermaterial gebildet werden und damit die Qualität des Materials stark beeinträchtigt wird.

Leider können diese Inhaltsstoffe oft erst im Schmelzezustand des Trägermaterials entfernt werden, bzw. ist es auch hier erst möglich die gasförmigen oder Gas emittierenden Inhaltsstoffe zu entfernen. Klassische Trocknungsmethoden sind meist sehr zeitaufwändig, da hier ein Diffusionsprozess durch das Material stattfinden muss und auch die Emmissionsreservoire nicht entfernt werden können.

Aus WO 93/04841 A ist bekannt, den aufzubereitenden Kunststoff in einem Extruder aufzuschmelzen, durch einen Filter zu leiten und anschließend zur Entfernung von flüchtigen Verunreinigungen zu entgasen. Um dabei einen Übertritt von aufgeschmolzenem Kunststoff von Plastifizierungsabschnitt zum Entgasungs- bzw. Austragsabschnitt zu vermeiden und damit sicherzustellen, dass sämtlicher aufgeschmolzener Kunststoff durch den Schmelzefilter durchtritt, ist zwischen dem Plastifizierungsabschnitt und dem Entgasungsabschnitt ein gegenläufiger Fördergang vorgesehen, der eine dem Schneckengewinde von Plastifizierungsabschnitt, Entgasungsabschnitt und Austragsabschnitt entgegengesetzte Steigung aufweist. Dadurch wird ein Anteil an bereits durch den Schmelzefilter hindurchgetretenem Schmelzestrom wieder in den Plastifizierungsabschnitt zurückgeführt. Dadurch soll vermieden werden, dass ungereinigtes Kunststoffmaterial unter Umgehung des Schmelzefilters direkt in den Entgasungs- bzw. Austragsabschnitt gelangt.

Nachteil dieses Verfahrens ist, dass in der Praxis trotzdem der Schmelzestrom mitsamt zumindest Restverunreinigungen auf die Dichtung auftrifft. Besonders bei metallischen oder mineralischen Verunreinigungen führt dieser Strom an abrasivem Material zu einer Abnützung der Dichtfläche und früher oder später geht die Schmelzebarriere verloren und Material tritt über die Dichtfläche in die nachfolgende Schneckenzone über. Es entsteht dann also eine Art Bypass und kontaminiertes, ungefiltertes Material kann den Extruder passieren.

Daher wurde in WO 94/29097 A vorgeschlagen, im Gehäuse des zweiten Schneckenabschnittes zwischen der Einströmöffnung und den Entgasungsöffnungen zumindest ein Staukörper für den Kunststoffstrom vorzusehen, der den Kunststoffstrom in eine schlauchförmige Gestalt zwingt und relativ zur Einströmöffnung verstellbar ist, wobei der Staukörper so vor der Einströmöffnung liegt, dass der aus der Einströmöffnung in das Gehäuse des zweiten Schneckenabschnittes strömende Kunststoff direkt auf den Umfang des Staukörpers trifft, der im axialen Abstand vor der ihm am nächsten liegenden Entgasungsöffnung angeordnet ist und einen sich zum zweiten Schneckenabschnitt hin verjüngenden Querschnitt hat. Nachteil dieser Vorrichtung ist es, dass der Staukörper durch die Kunststoffschmelze mechanischem Verschleiß ausgesetzt ist und dadurch der Staukörper im längeren Gebrauch zunehmend seine Dichtigkeit verliert und ungefilterte Schmelze den Extruder passieren kann.

Aus WO 2007/124519 A ist ein Extruder zum Entgasen und Filtern von Kunststoffschmelzen bekannt, mit einer in einem Gehäuse gelagerten Extruderschnecke, die einen zulaufseitigen Plastifizierungsabschnitt, einen einem Austragsabschnitt vorgelagerten Entgasungsabschnitt und zwischen dem Plastifizierungsabschnitt und dem Entgasungsabschnitt einen gegenläufigen Fördergang umfasst, und mit wenigstens einem den gegenläufigen Fördergang überbrückenden, ein Schmelzenfilter enthaltenden Strömungskanal, wobei die Extruderschnecke zwischen dem gegenläufigen Fördergang und der auslaufseitigen Mündung des Strömungskanals einen gleichläufigen Fördergang bildet und wobei das Gehäuse im Übergangsbereich zwischen dem gegenläufigen und dem gleichläufigen Fördergang wenigstens eine Entgasungsöffnung aufweist.

Dadurch soll der direkte Material- und Gasübertritt vom Plastifizierungsabschnitt in den Entgasungsabschnitt durch den Fördergang hindurch vermieden werden.

Aus WO 2013/013916 A ist eine Vorrichtung zum Entgasen von thermoplastischem Extrudat bekannt bestehend aus einem Extrudergehäuse und einer in diesem Gehäuse gelagerten Extruderschnecke, die mindestens einen Dichtabschnitt aufweist. Dieser Dichtabschnitt teilt das Extrudergehäuse axial in eine stromaufwärtige und eine stromabwärtige Kammer, wobei ein Übertrittskanal von der stromaufwärtigen kammer in die stromabwärtige Kammer führt. In der stromabwärtigen Kammer ist mindestens eine Gasabzugsöffnung angeordnet, die in Förderrichtung der Extruderschnecke in der stromabwärtigen Kammer vor der Mündung des Übertrittskanals angeordnet ist. Dadurch soll der Entgasungsgrad der Kunststoffschmelze während desgesamten Betriebes und auch bei einer Wiederinbetriebnahme der Vorrichtung verbessert werden. Auch hier besteht der Nachteil, dass der Dichtabschnitt hohem mechanischen Verschleiß ausgesetzt ist und dadurch mit fortschreitender Betriebsdauer ein direkter Durchtritt der verunreinigten Schmelze nicht ausgeschlossen werden kann.

Die DE 3336179 A1 offenbart eine Einrichtung zum Herstellen von aufgeschäumten thermoplastischen Kunststoffen. Hierzu wird ein Homogenisierungsextruder verwandt, an dessen Ende ein Treibmittel eingebracht wird und welches in einer anschließenden Kühleinheit mit Förderschnecke das Gemisch kühlt, sodass sich das Treibmittel thermisch bedingt nicht zersetzen kann.

Die GB 1 168 063 A offenbart einen Filter für Kunststoffextruder. Dieser ist dazu vorgesehen zwischen einer Presse und einem Extrusionskopf installiert zu werden.

Die DE 1 131 875 B offenbart eine Düse für das Verarbeiten von plastischen Materialien in Schneckenpressen.

Aufgabe der Erfindung war es eine Vorrichtung und ein Verfahren zum Entgasen und Filtern von Kunststoffschmelze bereitzustellen das die Nachteile des Standes der Technik vermeidet.

Gegenstand der Erfindung ist daher eine Vorrichtung nach Anspruch 1 zum Filtern und Entgasen von Kunststoffschmelzen, insbesondere thermoplastischen Kunststoffschmelzen, aufweisend einen Eintragsextruder, der mindestens eine in einem Gehäuse drehbare Extruderschnecke aufweist, wobei der Eintragsextruder in den Eintragsbereich eines oder mehrerer paralleler Schmelzefilter mündet und im Austragsbereich des/der Schmelzefilter ein Austragsextruder mit mindestens einer Extruderschnecke situiert ist, der entgegen der Richtung des Eintragsextruders in der Weise betrieben wird, dass die Schneckenspitze als Einzugszone und der antriebsnahe Bereich als Austragszone fungiert, wobei für den Austrag der Schmelze vor dem Antrieb des Austragsextruders eine Austragsöffnung im Gehäuse vorgesehen ist, wobei der Schaft der Extruderschnecke durch Dichtelemente gegen den Antrieb des Austragsextruders abgedichtet ist und wobei der Eintragsextruder in dem Schmelzefilter vorgeschaltete Schmelzeventile und/oder Schmelzeweichen. mündet und im Austragsbereich des/der Schmelzefilter dem Schmelzefilter nachgeschaltete Schmelzeventile und/oder Schmelzeweichen vorgesehen sind, nach denen der Austragsextruder situiert ist, und dass im Bereich des Austragsextruders eine oder mehrere Entgasungszonen vorgesehen sind.

Durch die erfindungsgemäße Vorrichtung und das darauf bezogene erfindungsgemäße Verfahren zu deren Verwendung nach Anspruch 12 ist es möglich unmittelbar nach dem Aufschmelzen Gase und gasemittiernde Stoffe aus einer Schmelze, die vorher erzeugt werden kann, herauszufiltern und im Anschluss das Material in guter Qualität weiter zu plastifizieren und zu homogenisieren.

Falls nötig kann dabei der Reinigungsprozess durch Additive, Hilfsstoffe, Absorber, Katalysatoren und dergleichen unterstützt werden wobei die Zusatzstoffe bei der Filtration mit entfernt werden oder ausgasen können.

Eintrags- und/oder Austragsextruder können als Einwellen-, Zweiwellen oder Mehrwellenextruder ausgeführt sein.

Der Eintragsextruder mündet zweckmäßigerweise in dem oder den Schmelzefilter(n) vorgeschaltete Schmelzeventile und/oder Schmelzeweichen. Im Austragsbereich des/der Schmelzefilter sind dem Schmelzefilter/ der Schmelzweiche nachgeschaltete Schmelzeventile und/oder Schmelzeweichen vorgesehen, hinter denen der Austragsextruder situiert ist.

Als Schmelzefilter sind beispielsweise übliche Bandfilter einsetzbar. Aber auch alle anderen Filtrationssysteme sind denkbar. Insbesondere können in diesem Bereich auch Entgasungssysteme verbaut sein, die neben Feuchtigkeit auch Geruchsstoffe z.B. durch Anlegen von Vakuum z.B. 10-10⁻⁴mbar)

Im Bereich des Austragsextruders ist im Gehäuse mindestens eine Austragsöffnung vorgesehen, die in einem Winkel bis zu 120° angeordnet ist.

Der Austragsextruder wird entgegen der üblichen Richtung betrieben. Die Schneckenspitze des Austragsextruders ragt dabei in das Austrittselement des Filters und fördert die Schmelze weg in Richtung Motor. Damit ist der Austragsextruder spiegelbildlich zum Eintragsextruder ausgeführt.

Der Austragsextruder weist eine Einzugszone, die im Bereich der Schneckenspitze liegt, auf. An diese Einzugszone schließt sich die Kompressionszone und dann die Austragszone vor dem Bereich des Antriebs des Austragsextruders an. Im Bereich des Antriebs des Austragsextruders wird die Schnecke über Dichteinrichtungen abgedichtet. Die Abdichtung kann beispielsweise durch Schmelzerstarrung, durch ein Labyrinth oder durch Gegenlaufelemente erfolgen. Es ist aber auch möglich die Abdichtung durch Zuführung von Dichtmasse oder Kunststoffgranulat ggf. über einen Zusatzextruder zu erzielen.

Selbst wenn es in diesem Bereich zu Leckagen kommen sollte sind diese für die Qualität der gefilterten Schmelze ohne Bedeutung, die die Schmelze bereits gefiltert ist und somit auch nicht zum Verschleiß der Bauteile des Extruders beitragen kann.

Die Schmelze wird dabei nicht wie üblich über die Schneckenspitze ausgetragen, sondern senkrecht oder in einem Winkel bis zu 120° ausgeleitet. Zur Ausleitung der Schmelze kann wiederum eine Schnecke im Austragsbereich vorgesehen sein, die die Schmelze über die Austragsöffnung aus dem Extruder fördert.

Vorteilhafterweise kann die Entgasung in diesen Entgasungszonen unter Unterdruck erfolgen.

Es ist aber auch möglich die Entgasung durch Drähte, Meander, Zapfen oder Scherspalte unterstützt werden.

Die Schneckenspitzen des Ein- und/oder Austragsextruders können auch gelagert sein und müssen kein freies Ende haben. Das ist insbesondere von Vorteil, wenn durch Absperren eines der beiden Filter, beispielsweise bei einem Reinigungsvorgang des Filters eine unsymmetrische Belastung auftritt. Die Lagerung der Schnecke ermöglich insbesondere bei längeren Schnecken einen besseren Gleichlauf und kann zusätzliche Axialkräfte aufnehmen.

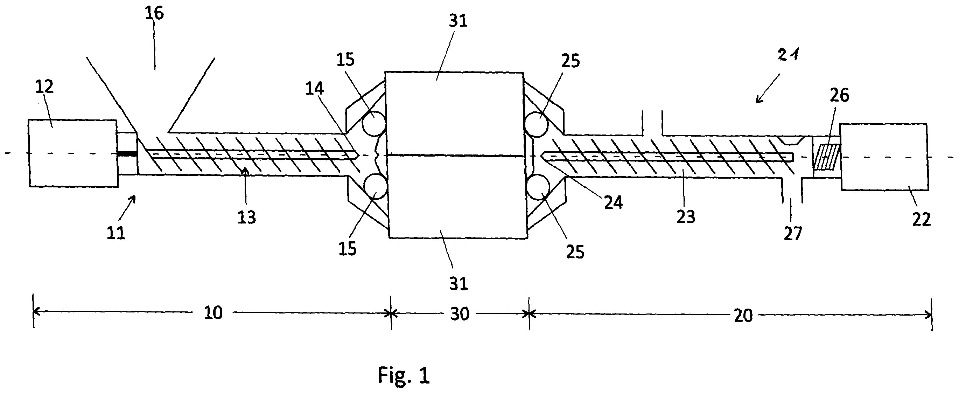

In Figur 1 ist eine erfindungsgemäße Vorrichtung zum Filtern und Entgasen von Kunststoffschmelzen dargestellt.

In diesem Ausführungsbeispiel werden 2 Filtereinheiten verwendet.

### Darin bedeuten

10 die Eintragszone
20 die Austragszone
30 die Filterzone
11 den Eintragsextruder
12 den Antrieb des Eintragstragesextruders
13 die Schnecke des Eintragsextruders
14 die Schneckenspitze des Eintragsextruders
15 die Schmelzeventile für den Eintrag der Schmelze in den Filterbereich
16 die Zuführungsöffnung der Schmelze zum Eintragsextruder
21 den Austragsextruder
22 den Antrieb des Austragsextruders
23 die Schnecke des Austragsextruders
24 die Schneckenspitze des Austragsextruders
25 die Schmelzeventile für den Austrag der Schmelze
26 ein Dichtelement
27 die Austragsöffnung zum Transport der Schmelze aus dem Austragsextruder
31 Filtermodule

## Patentansprüche

1. Vorrichtung zum Filtern und Entgasen von Kunststoffschmelzen, insbesondere thermoplastischen Kunststoffschmelzen, aufweisend einen Eintragsextruder (11), der mindestens eine in einem Gehäuse drehbare Extruderschnecke (13) aufweist, wobei der Eintragsextruder in den Eintragsbereich eines oder mehrerer paralleler Schmelzefilter (31) mündet und im Austragsbereich des/der Schmelzefilter ein Austragsextruder (21) mit mindestens einer Extruderschnecke (23) situiert ist, der entgegen der Richtung des Eintragsextruders in der Weise betrieben wird, dass die Schneckenspitze (24) als Einzugszone und der antriebsnahe Bereich als Austragszone fungiert, wobei für den Austrag der Schmelze vor dem Antrieb des Austragsextruders (22) eine Austragsöffnung (27) im Gehäuse vorgesehen ist, **dadurch gekennzeichnet, dass** der Schaft der Extruderschnecke durch Dichtelemente (26) gegen den Antrieb des Austragsextruders abgedichtet ist, und wobei der Eintragsextruder in dem Schmelzefilter vorgeschaltete Schmelzeventile (15) und/oder Schmelzeweichen mündet und im Austragsbereich des/der Schmelzefilter dem Schmelzefilter nachgeschaltete Schmelzeventile (25) und/oder Schmelzeweichen vorgesehen sind, nach denen der Austragsextruder situiert ist, und dass im Bereich des Austragsextruders eine oder mehrere Entgasungszonen vorgesehen sind.

2. Vorrichtung nach Anspruch 1, **dadurch gekennzeichnet, dass** im Bereich des Austragsextruders die Austragsöffnung (27) in einem Winkel von bis zu 120° angeordnet ist.

3. Vorrichtung nach einem der Ansprüche 1 oder 2, **dadurch gekennzeichnet, dass** der Austragsextruder mindestens eine Einzugszone, eine Kompressionszone und eine Austragszone aufweist.

4. Vorrichtung nach einem der Ansprüche 1 bis 3, **dadurch gekennzeichnet, dass** die Entgasung in der Entgasungszone unter Unterdruck erfolgt.

5. Vorrichtung nach einem der Ansprüche 1 bis 4, **dadurch gekennzeichnet, dass** die Entgasung in der Entgasungszone durch Drähte, Meander, Zapfen oder Scherspalte unterstützt wird.

6. Vorrichtung nach einem der Ansprüche 1 bis 5, **dadurch gekennzeichnet, dass** der Eintragsextruder mindestens eine Einzugszone, eine Kompressionszone und eine Austragszone aufweist.

7. Vorrichtung nach einem der Ansprüche 1 bis 6, **dadurch gekennzeichnet, dass** (eine) Misch- und Förderzone(n) im Austragsextruder spiegelbildlich zur Anordnung der entsprechenden Zonen im Eintragsextruder angeordnet ist/sind.

8. Vorrichtung nach einem der Ansprüche 1 bis 7, **dadurch gekennzeichnet, dass** als Dichtelemente (26), die den Austragsextruderschneckenraum gegen den Antrieb des Austragsextruders (22) abdichten Einrichtungen zur Schmelzerstarrung, Gegenlaufelemente oder ein Labyrinthsystem verwendet werden oder die Abdichtung über eine Zuführung von Dichtmassen oder Kunststoffgranulat erzielt wird.

9. Vorrichtung nach Anspruch 8, **dadurch gekennzeichnet, dass** die Zuführung von Dichtmassen oder Kunststoffgranulat über einen Zusatzextruder erzielt wird.

10. Vorrichtung nach einem der Ansprüche 1 bis 9, **dadurch gekennzeichnet, dass** die Schneckengeometrie im Austragsextruder (21) spiegelbildlich zur Schneckengeometrie des Eintragsextruders (11) ausgeführt ist.

11. Vorrichtung nach einem der Ansprüche 1 bis 10, **dadurch gekennzeichnet, dass** der Austragsextruder (21) und/oder der Eintragsextruder (11) zwei oder mehrere Extruderschnecken aufweist, die gleich- oder gegenlaufend ausgeführt sein können.

12. Verfahren zur Verwendung einer Vorrichtung nach einem der Ansprüche 1 bis 11 zum Filtern und Entgasen von thermoplastischen Kunststoffschmelzen.

## Claims

1. An apparatus for filtering and degassing plastic melts, in particular of thermoplastic plastic melts, comprising a feeding extruder (11) which comprises at least one extruder screw (13) which is rotatable in a housing, wherein the feeding extruder opens into the feeding region of one or multiple parallel melt filters (31) and a discharge extruder (21) with at least one extruder screw (23) is situated in the discharge region of the melt filter(s), the discharge extruder being operated in the opposite direction of the feeding extruder in such a way that the screw tip (24) acts as the intake zone and the region near the drive acts as the discharge zone, wherein, for discharging the melt, a discharge aperture (27) is provided in the housing before the drive of the discharge extruder (22), **characterized in that** the shaft of the extruder screw is sealed against the drive of the discharge extruder by sealing elements (26) and wherein the feeding extruder opens into melt valves (15) and/or melt deflectors which are upstream of the melt filter, and melt valves (25) and/or melt deflectors are provided in the discharge region of the melt filter(s) downstream of the melt filter, subsequent to which the discharge extruder is situated, and that one or multiple degassing zones are provided in the region of the discharge extruder.

2. The apparatus according to claim 1, **characterized in that** in the region of the discharge extruder, the discharge aperture (27) is arranged in an angle of up to 120°.

3. The apparatus according to one of claims 1 or 2, **characterized in that** the discharge extruder comprises at least one intake zone, one compression zone and one discharge zone.

4. The apparatus according to one of claims 1 to 3, **characterized in that** degassing in the degassing zone is carried out under negative pressure.

5. The apparatus according to one of claims 1 to 4, **characterized in that** degassing in the degassing zone is supported by wires, meanders, pins, or shear gaps.

6. The apparatus according to one of claims 1 to 5, **characterized in that** the feeding extruder comprises least one intake zone, one compression zone and one discharge zone.

7. The apparatus according to one of claims 1 to 6, **characterized in that** (a) mixing and conveyor zone(s) is/are provided in the discharge extruder in a mirror-inverted manner with respect to the arrangement of the corresponding zones in the feeding extruder.

8. The apparatus according to one of claims 1 to 7, **characterized in that** melt solidification means, counter-rotating elements or a labyrinth system are used as sealing elements (26) which seal the area of the discharge extruder screw against the drive of the discharge extruder (22), or **in that** sealing is accomplished by supplying sealants or plastic granulate.

9. The apparatus according to claim 8, **characterized in that** the supply of sealants or plastic granulate is achieved via an additional extruder.

10. The apparatus according to one of claims 1 to 9, **characterized in that** the screw geometry in the discharge extruder (21) is configured in a mirror-inverted manner with respect to the screw geometry of the feeding extruder (11).

11. The apparatus according to one of claims 1 to 10, **characterized in that** the discharge extruder (21) and/or the feeding extruder (11) comprise(s) two or multiple extruder screws, which may be configured in an equidirectional or reverse manner.

12. A method for using an apparatus according to one of claims 1 to 11 for filtering and degassing thermoplastic plastic melts.

## Revendications

1. Dispositif pour le filtrage et le dégazage de fontes de matières plastiques, plus particulièrement de fontes de matière plastiques thermoplastiques, comprenant une extrudeuse d'entrée (11), qui comprend au moins une vis sans fin d'extrusion (13) rotative dans un boîtier, dans lequel l'extrudeuse d'entrée débouche dans la zone d'entrée d'un ou plusieurs filtres à fonte (31) parallèles et, dans la zone de sortie du/des filtres de fontes, se trouve une extrudeuse de sortie (21) avec au moins une vis sans fin d'extrusion (23), qui fonctionne dans le sens opposé à celui de l'extrudeuse d'entrée, de façon à ce que la pointe de la vis sans fin (24) serve de zone d'entrée et la zone près de l'entraînement serve de zone de sortie, dans lequel, pour la sortie de la fonte, avant l'entraînement de l'extrudeuse de sortie (22), est prévue une ouverture de sortie (27) dans le boîtier, **caractérisé en ce que** l'arbre de la vis sans fin d'extrusion est étanchéifiée à l'aide d'éléments d'étanchéité (26) par rapport à l'entraînement de l'extrudeuse de sortie et dans lequel l'extrudeuse d'entrée débouche dans les soupapes à fonte (15) et/ou les aiguillages de fonte situés en amont du filtre à fonte et, dans la zone de sortie du/des filtres à fonte, sont prévus des soupapes à fonte (25) et/ou des aiguillages de fonte branchés en amont du filtre à fonte, après lesquels se trouve l'extrudeuse de sortie, et **en ce que**, au niveau de l'extrudeuse de sortie, sont prévues une ou plusieurs zones de dégazage.

2. Dispositif selon la revendication 1, **caractérisé en ce que**, au niveau de l'extrudeuse de sortie, l'ouverture de sortie (27) est disposée à un angle jusqu'à 120°.

3. Dispositif selon l'une des revendications 1 ou 2, **caractérisé en ce que** l'extrudeuse de sortie comprend au moins une zone d'entrée, une zone de compression et une zone de sortie.

4. Dispositif selon l'une des revendications 1 à 3, **caractérisé en ce que** le dégazage a lieu dans la zone de dégazage à l'aide d'une dépression.

5. Dispositif selon l'une des revendications 1 à 4, **caractérisé en ce que** le dégazage est favorisé, dans la zone de dégazage, par des fils, des méandres, des robinets ou des interstices de cisaillement.

6. Dispositif selon l'une des revendications 1 à 5, **caractérisé en ce que** l'extrudeuse d'entrée comprend au moins une zone d'entrée, une zone de compression et une zone de sortie.

7. Dispositif selon l'une des revendications 1 à 6, **caractérisé en ce qu'**une ou des zones de mélange et de convoyage est/sont disposées dans l'extrudeuse de sortie, de manière symétrique en miroir par rapport à la disposition des zones correspondantes dans l'extrudeuse d'entrée.

8. Dispositif selon l'une des revendications 1 à 7, **caractérisé en ce que**, en tant qu'éléments d'étanchéité (26), qui étanchéifient l'espace de la vis sans fin de l'extrudeuse de sortie par rapport à l'entraînement de l'extrudeuse de sortie (22), sont utilisés des dispositifs de solidification de la fonte, des éléments inverses ou un système de labyrinthe ou l'étanchéification est obtenue grâce à l'introduction d'enduits d'étanchéité ou d'un granulé de matière plastique.

9. Dispositif selon la revendication 8, **caractérisé en ce que** l'introduction d'enduits d'étanchéité ou d'un granulé de matière plastique a lieu par l'intermédiaire d'une extrudeuse supplémentaire.

10. Dispositif selon l'une des revendications 1 à 9, **caractérisé en ce que** la géométrie de la vis sans fin dans l'extrudeuse de sortie (21) est réalisée de manière symétrique en miroir par rapport à la géométrie de la vis sans fin de l'extrudeuse d'entrée (11).

11. Dispositif selon l'une des revendications 1 à 10, **caractérisé en ce que** l'extrudeuse de sortie (21) et/ou l'extrudeuse d'entrée (11) comprend deux vis sans fin d'extrusion ou plus, qui peuvent être conçues dans le même sens ou de manière opposée entre elles.

12. Procédé pour l'utilisation d'un dispositif selon l'une des revendications 1 à 11 pour le filtrage et le dégazage de fontes de matière plastique thermoplastique.
